# EUROPÄISCHE PATENTSCHRIFT

(11) **EP 1 929 352 B1**
(45) Veröffentlichungstag und Bekanntmachung des Hinweises auf die Patenterteilung: **11.04.2012**
(21) Anmeldenummer: 06805712.4
(22) Anmeldetag: 14.09.2006
(51) Int. Cl.: G02B 21/00

(54) **VORRICHTUNG UND VERFAHREN ZUM ERZEUGEN EINES BILDES EINES OBJEKTES**
DEVICE AND METHOD FOR GENERATING AN IMAGE OF AN OBJECT
DISPOSITIF ET PROCEDE DE PRODUCTION D'UNE IMAGE D'UN OBJET

(30) Priorität: 29.09.2005 DE 102005046755
(43) Veröffentlichungstag der Anmeldung: 11.06.2008
(73) Patentinhaber: Carl Zeiss MicroImaging GmbH, 07745 Jena (DE)
(72) Erfinder: KEMPE, Michael, 07751 Kunitz (DE); WOLLESCHENSKY, Ralf, 07743 Jena (DE)
(74) Vertreter: Hampe, Holger
(86) Internationale Anmeldenummer: PCT/EP2006/008946
(87) Internationale Veröffentlichungsnummer: WO 2007/036305

(56) Entgegenhaltungen:
- EP-A- 1 400 780
- WO-A-97/06509
- WO-A-98/45745
- DE-A1- 10 118 463
- DE-A1- 10 155 002
- DE-A1- 10 254 139
- JP-A- 2003 084 206
- NEIL M A A ET AL: "METHOD OF OBTAINING OPTICAL SECTIONING BY USING STRUCTURED LIGHT IN A CONVENTIONAL MICROSCOPE" OPTICS LETTERS, OSA, OPTICAL SOCIETY OF AMERICA, WASHINGTON, DC, US, Bd. 22, Nr. 24, 15. Dezember 1997 (1997-12-15), Seiten 1805-1807, XP000733996 ISSN: 0146-9592 in der Anmeldung erwähnt

## Beschreibung

Die Erfindung betrifft eine Vorrichtung zu einem Erzeugen eines Bildes eines Objektes, mit einem Beleuchtungsmodul, mit dem das Objekt mit einem Muster, dessen Phase zeitlich verändert wird, beleuchtet werden kann, einem Aufnahmemodul, mit dem mehrere Aufnahmen des Objekts während der Phasenänderung des Musters durchgeführt werden, und einem Verarbeitungsmodul, das aus den Aufnahmen das Bild erzeugt. Ferner betrifft die Erfindung ein Verfahren zum Erzeugen eines Bildes eines Objekts mit den Schritten: Beleuchten des Objekts mit einem Muster, dessen Phase zeitlich verändert wird, mehrmaliges Aufnehmen des Objekts während der Phasenänderung und Erzeugen des Bildes aus den Aufnahmen. Eine solche Vorrichtung und ein solches Verfahren werden im häufig im Bereich der Lasermikroskopie eingesetzt.

Es ist bekannt, daß zur Erzielung von konfokaler Tiefendiskriminierung im Weitfeld bzw. bei partieller Beleuchtung des Bildfeldes (z. B. einer Linienbeleuchtung) eine Strukturierung der Beleuchtung eingesetzt werden kann. Durch eine Phasenverschiebung der strukturierten Beleuchtung kann dann ein tiefendiskriminierter optischer Schnitt berechnet und so das gewünschte Bild des Objekts erzeugt werden. Wie beispielsweise in M.A.A. Neil et al. "Method of obtaining optical sectioning by using structured light in a conventional microscope" Optics Letters 22(24) 1997, 1905-1907 beschrieben ist, kann dies mit drei Phasenbildern bei 0°, 120° und 240° erreicht werden.

Aus JP2003084206 A sind weiterhin Modulatoren zur zeitlichen Veränderung der Phase eines auf eine Probe projizierten Rasters (Gitters) bekannt.

Zur Strukturierung der Beleuchtung werden entweder Gitter im Beleuchtungsstrahlengang, die Interferenz von kohärenten Teilstrahlen oder der Einsatz von diffraktiven optischen Elementen vorgeschlagen. Nachteilig ist die dadurch bedingte Inflexibilität, da bei einem Wechsel des Objektivs des Lasermikroskops im Allgemeinen auch ein Wechsel der Strukturierung erforderlich ist. Dazu muß dann in der Regel ein anderes Gitter vorgesehen werden, die

Interferenz der kohärenten Teilstrahlen geändert werden oder ein anderes diffraktives optisches Element eingesetzt werden.

Zur Erzielung einer Auflösungssteigerung ist eine Strukturierung in der Nähe der Grenzfrequenz des beleuchtungsseitigen Objektivs nötig. Dies wird häufig nur bei einer geringen Modulationstiefe und/oder einer geringen beleuchtungsseitigen Effizienz erreicht.

Ferner ist die im allgemeinen geringe Beleuchtungsintensität (insbesondere die beleuchtungsseitige geringe Effizienz bei der beschriebenen Auflösungssteigerung) von Nachteil, wenn nichtlineare Probenwechselwirkungen erzielt werden sollen.

Ausgehend hiervon ist es Aufgabe der Erfindung, eine Vorrichtung zum Erzeugen eines Bildes der eingangs genannten Art und ein Verfahren zum Erzeugen eines Bildes der eingangs genannten Art so weiterzubilden, daß die obigen Nachteile so gut wie vollständig überwunden werden können.

Die Aufgabe wird bei einer Vorrichtung der eingangs genannten Art dadurch gelöst, daß das Beleuchtungsmodul einen Lichtstrahl über das Objekt bewegt und seine Intensität synchron zur Bewegung so moduliert, daß der Strahl das Muster scannend erzeugt.

Unabhängig von der durch das Muster vorgegebenen Frequenz und Beleuchtungsverteilung kann immer eine vollständige Modulation (Modulationstiefe von 1) erzielt werden. Ferner kann unabhängig vom Muster die Beleuchtungsintensität maximiert werden, was besonders bei nichtlinearen Wechselwirkungen von Vorteil ist. Die Maximierung kann insbesondere dadurch erreicht werden, daß eine beugungsbegrenzte Fokussierung durchgeführt wird. Dabei kann es sich beispielsweise um einen punktförmigen oder linienförmigen Fokus handeln.

Das Muster, das auf oder in der Probe erzeugt wird, kann bevorzugt ein periodisches Muster (periodische Intensitätsverteilung) sein. Damit läßt sich aus den Aufnahmen besonders einfach das Bild des Objekts (also insbesondere der gewünschte tiefendiskriminierte optische Schnitt) berechnen oder erzeugen.

Das Aufnahmemodul kann einen Flächendetektor aufweisen, der synchron zur Bewegung des Strahls die durch den Lichtstrahl (bzw. optischen Strahl) erzeugte Probenstrahlung räumlich aufgelöst detektiert. Bei der Probenstrahlung handelt es sich um die Strahlung, die durch Wechselwirkung des auf bzw. in die Probe fokussierten und über die Probe bewegten Lichtstrahls mit der Probe erzeugt wird. Insbesondere kann es sich dabei um Fluoreszenzlicht, reflektiertes Licht, Lumineszenzlicht, gestreutes und/oder transmittiertes Licht handeln.

Der Flächendetektor kann als Matrix- oder Liniendetektor ausgebildet sein.

Das Beleuchtungsmodul kann die Phase zeitlich linear oder auch zeitlich periodisch ändern. Als periodische Änderung kann insbesondere eine sinus- oder cosinus-förmige Phasenänderung durchgeführt werden.

Zur Intensitätsmodulation kann das Beleuchtungsmodul einen optischen Schalter aufweisen. Insbesondere kann ein AOM (akusto-optischer Modulator) oder ein EOM (elektro-optischer Modulator) eingesetzt werden.

Die Vorrichtung kann ferner ein Steuermodul aufweisen, daß das Beleuchtungs-, Aufnahme-und Verarbeitungsmodul so steuert, daß die Beleuchtung des Objekts in unterschiedlichen Tiefen im Objekt durch Fokussierung des Strahls in den Tiefen erfolgt und in den unterschiedlichen Tiefen jeweils mehr Aufnahmen aufnimmt, so daß das Verarbeitungsmodul Bilder aus unterschiedlichen Tiefen des Objekts erzeugen kann. Natürlich können die Bilder aus den unterschiedlichen Tiefen auch zur Erzeugung einer dreidimensionalen Darstellung genutzt werden.

Das Beteuchtungsmodut kann mehrere Lichtstrahlen erzeugen, die voneinander beabstandet auf das Objekt fokussiert und über das Objekt bewegt werden, wobei dabei die Intensität der Strahlen synchron zur Bewegung so geändert wird, daß die Strahlen das Muster scannend erzeugen. Durch den Einsatz von mehreren voneinander beabstandeten Strahlen kann das Objekt zeitlich schneller beleuchtet werden.

Die erfindungsgemäße Vorrichtung zur Erzeugung eines Bildes eines Objekts ist insbesondere als Mikroskop ausgebildet. Das Mikroskop kann ein Laser-Scanning-Mikroskop sein.

Die Aufgabe wird ferner gelöst durch ein Verfahren der eingangs genannten Art, bei dem im Beleuchtungsschritt ein Lichtstrahl, dessen Intensität zeitlich moduliert wird, über das Objekt bewegt wird, wobei die Bewegung und die Intensitätsmodulation des Lichtstrahls so synchronisiert werden kann, daß der Strahl das Muster scannend erzeugt.

Mit diesem Verfahren kann unabhängig von der Form des Musters stets eine vollständige Modulation (Modulationstiefe von 1) erreicht werden. Ferner kann die Beleuchtungsintensität unabhängig vom Muster maximiert werden. Beispielsweise kann der Strahl beugungsbegrenzt fokussiert werden, insbesondere punkt- oder linienförmig. Das Muster kann insbesondere ein periodisches Muster sein.

Ferner kann das Muster schnell geändert werden, wenn dies beispielsweise aufgrund eines Wechsels eines optischen Elements (z.B. Objektiv) des Beleuchtungsmoduls erforderlich ist.

Insbesondere kann zum Aufnehmen des Objekts synchron mit der Bewegung des Strahls räumlich aufgelöst die durch den Strahl erzeugte Probenstrahlung detektiert werden. Dazu können herkömmliche orstauflösende Detektoren eingesetzt werden. Insbesondere können Linien oder Flächendetektoren verwendet werden.

Die zeitliche Änderung der Phase kann beispielsweise linear oder periodisch erfolgen. Insbesondere kann eine cosinus- bzw. sinusförmige zeitliche Phasenänderung durchgeführt werden.

Der Beleuchtungsschritt, die Aufnahmeschritte und die Erzeugungsschritte können mehrmals durchgeführt werden, wobei in den unterschiedlichen Beleuchtungsschritten eine Fokussierung des Strahls in unterschiedlichen Tiefen der Probe erfolgt, so daß Bilder aus unterschiedlichen Tiefen der Probe erzeugt werden können. Diese Bilder können natürlich auch dazu benutzt werden, um ein dreidimensionales Bild der Probe zu erzeugen.

Ferner können bei dem Verfahren mehrere Lichtstrahlen, deren Intensität zeitlich moduliert werden kann, voneinander beabstandet auf das Objekt fokussiert und zusammen über das Objekt bewegt werden, wobei die Bewegung und die Intensitätsmodulation der Strahlen so synchronisiert werden, daß die Strahlen das Muster scannend erzeugen. Durch den Einsatz von mehreren Strahlen kann das Muster schneller erzeugt werden, wodurch insgesamt die Bilderzeugung beschleunigt ist.

Das erfindungsgemäße Verfahren zum Erzeugen eines Bildes eines Objekts ist insbesondere ein Mikroskopieverfahren. Das Mikroskopieverfahren kann ein Laser-Scanning-Mikroskopieverfahren sein.

Unter Lichtstrahlen werden hier insbesondere Lichtstrahlen mit einer Wellenlänge aus dem UVbis zum IR-Bereich verstanden (z. B. aus dem Bereich von 300 nm-1,5 µm).

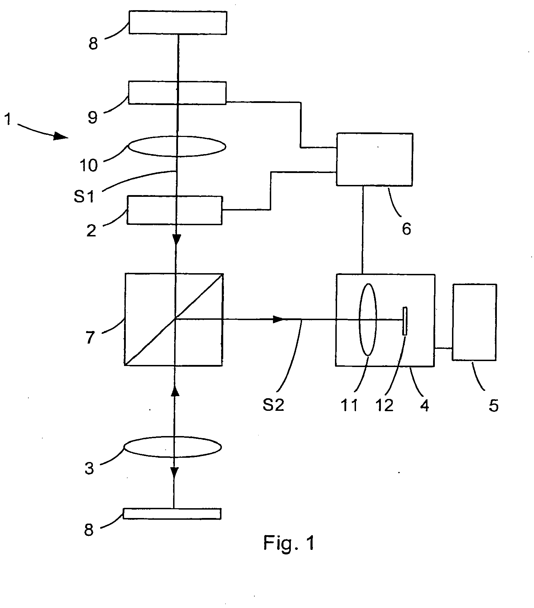

Die Erfindung wird nachfolgend beispielshalber anhand der beigefügten Figur 1 noch näher erläutert.

Bei der in Fig. 1 gezeigten Ausführungsform ist die Vorrichtung zum Erzeugen eines Bildes eines Objekts als Laser-Scanning-Mikroskop ausgebildet, das ein Strahlerzeugungsmodul 1, ein Scanmodul 2, ein Objektiv 3, ein Aufnahmemodul 4, ein Verarbeitungsmodul 5 sowie ein Steuermodul 6 umfaßt.

Das Strahlerzeugungsmodul 1 erzeugt einen Laserstrahl S1, der über das Scanmodul 2 und einen zwischen dem Scanmodul 2 und dem Objektiv 3 geschalteten Strahlteiler 7 und über das Objektiv 3 auf die Probe 8 gelenkt wird, wobei das Scanmodul 2 die Ablenkung des Laserstrahls über die Probe 8 bewirkt.

Das Strahlerzeugungsmodul 1 bildet_zusammen mit dem Scanmodul 2 und dem Objektiv 3 ein Beleuchtungsmodul, das den erzeugten Laserstrahl bzw. Laserstrahlenbündel S1 auf oder bevorzugt in eine vorbestimmte Tiefe der Probe 8 fokussiert und ablenkt. In der beschriebenen Ausführungsform wird eine beugungsbegrenzte, punktförmige Fokussierung durchgeführt. Das Scanmodul 2 lenkt den Laserstrahl S1 in zwei verschiedenen Richtungen ab, um die Probe flächig zu beleuchten. Wie nachfolgend noch näher erläutert wird, erzeugt das Strahlerzeugungsmodul 1 einen intensitätsmodulierten Laserstrahl S1 derart synchron zur Ablenkung des Scanmoduls 2, daß der fokussierte Laserstrahl S1 auf bzw. in der Probe eine Beleuchtung mit einer vorbestimmten örtlichen Intensitätsvariation erzeugt. Es wird ein Muster auf bzw. in die Probe abgebildet. Ferner wird zusätzlich noch eine zeitliche Phasenänderung des Musters bewirkt.

Zur Erzeugung eines derart modulierten Laserstrahls (bzw. Lichtstrahls) S1 umfaßt das Strahlerzeugungsmodul 1 einen Laser 8, dem ein optischer Schalter 9 zur Intensitätsmodulation und eine Optik 10 zur Strahlformung nachgeschaltet sind. Das Steuermodul 6 steuert das Strahlerzeugungsmodul 1 (hier den optischen Schalter 9 und das Scanmodul 2) derart, daß das gewünschte Beleuchtungsmuster erzeugt und dessen Phase (bevorzugt periodisch) geändert wird. Das Beleuchtungsmuster selbst kann vorzugsweise auch ein örtlich periodisches Muster sein.

In der derart beleuchteten Probe 8 wird aufgrund der Wechselwirkung des modulierten Laserstrahls S1 mit der Probe 8 Probenlicht S2 erzeugt, das über das Objektiv 3 und den Strahlenteiler 7 in das Aufnahmemodul 4 gelangt. Das Aufnahmemodul umfaßt hier eine Aufnahmeoptik 11 sowie einen Detektor 12. Aufgrund der punktförmigen Fokussierung wird stets nur ein Probenpunkt beleuchtet, dessen Probenlicht S2 mittels dem Detektor 12 aufgenommen wird. Die so erzeugten Daten werden dem Verarbeitungsmodul 5 zugeführt, das aufgrund der verschiedenen Aufnahmen mit verschiedenen Phasenlagen tiefendiskriminierte Schnitte berechnen kann.

Alternativ kann das Strahlerzeugungsmodul 1 so ausgebildet sein, daß es einen linienförmigen Fokus in der Probe 8 erzeugt. In diesem Fall ist das Scanmodul 2 so ausgebildet, daß es eine Ablenkung senkrecht zur Erstreckungsrichtung des linienförmigen Fokus bewirkt, so daß wiederum die gesamte Probe scannend beleuchtet wird. In diesem Fall muß der Detektor 12 auch zumindest ein linienförmiger Detektor sein, um stets das Probenlicht aus dem gerade beleuchteten linienförmigen Abschnitt ortsauflösend detektieren zu können.

Neben der beschriebenen Aufnahme mit unterschiedlichen Phasenlagen (beispielsweise 0°, 120° und 240°) ist es auch möglich, einen In-Phase-Anteil des Probenlichts S2 und einen Außer-Phase-Anteil des Probenlichtes S2 im Aufnahmemodul 4 räumlich zu trennen und die beiden Anteile auf zwei unterschiedliche Detektoren (beispielsweise ortsauflösende Liniendetektoren) zu lenken. Bei einer großen Anzahl von Änderungen des Beleuchtungsmusters kann man aus diesen beiden In- und Außer-Phase-Signalen auch einen tiefendiskriminierten optischen Schnitt berechnen, wie dies beispielsweise in der DE 102 54 139 A1 ausführlich beschrieben ist. Die räumliche Trennung des In- und Außer-Phasen-Anteils kann in gleicher Weise, wie insbesondere in Verbindung mit Abbildung 4 der DE 102 54 139 A1 beschrieben ist, durchgeführt werden.

## Patentansprüche

1. Vorrichtung zum Erzeugen eines Bildes eines Objektes, mit einem Beleuchtungsmodul (1) zur Beleuchtung des Objektes mit einem Muster, dessen Phase zeitlich verändert wird,
einem Aufnahmemodul (4) zur Durchführung mehrerer Aufnahmen des Objektes,
einem Verarbeitungsmodul (5) zur Erzeugung eines Bildes aus Aufnahmen des Objektes, **dadurch gekennzeichnet, dass**
das Beleuchtungsmodul (1) einen Lichtstrahl (S1) oder ein Lichtstrahlbündel erzeugt und zur Ablenkung des Lichtstrahls oder Lichtstrahlbündels über das Objekt ein Scanmodul (2) vorgesehen ist -
und im Beleuchtungsmodul ein optischer Schalter (9) zur Intensitätsmodulation synchron zur Ablenkung vorgesehen ist,
wobei zur Steuerung des Beleuchtungsmoduls und des Scanmoduls ein Steuermodul (6) vorgesehen ist.

2. Vorrichtung nach Anspruch 1, **dadurch gekennzeichnet, dass** im Beleuchtungsmodul (1) ein Objektiv (3) zur Fokussierung des Lichtstrahls (S1) auf die Probe vorgesehen ist.

3. Vorrichtung nach Anspruch 1 oder 2, **dadurch gekennzeichnet, daß** der Lichtstrahl punktförmig oder linienförmig auf die Probe fokussiert ist.

4. Vorrichtung nach einem der obigen Ansprüche, **dadurch gekennzeichnet, daß** das Aufnahmemodul (4) zur räumlich aufgelösten Detektion der Probenstrahlung über das Objektiv (3) einen Flächendetektor (12) aufweist.

5. Vorrichtung nach Anspruch 4, **dadurch gekennzeichnet, daß** der Flächendetektor (12) als Matrix- oder Liniendetektor ausgebildet ist.

6. Vorrichtung nach einem der obigen Ansprüche, **dadurch gekennzeichnet, daß** das Heleuchtungsmodul (1) zur zeitlich linearen oder periodischen Änderung der Phase ausgebildet ist.

7. Vorrichtung nach einem der obigen Ansprüche, **dadurch gekennzeichnet, daß** ein Beleuchtungsmodul (1) zur Erzeugung mehrerer Lichtstrahlen vorgesehen ist, die voneinander beabstandet sind und auf das Objekt fokussiert und über das Objekt bewegbar sind.

8. Verfahren zum Erzeugen eines Bildes eines Objektes mit den Schritten:
Beleuchten des Objekts mit einem periodischen Muster, dessen Phase zeitlich verändert wird,
mehrmaliges Aufnehmen des Objekts während der Phasenänderung und
Erzeugen des Bildes aus den Aufnahmen,
**dadurch gekennzeichnet, daß**
im Beleuchtungsschritt ein Lichtstrahl, dessen Intensität zeitlich moduliert wird, über das Objekt bewegt wird, wobei die Bewegung und Intensitätsmodulation des Lichtstrahls so synchronisiert werden, daß der Strahl das Muster scannend erzeugt.

9. Verfahren nach Anspruch 8, **dadurch gekennzeichnet, daß** der Strahl im Beleuchtungsschritt fokussiert, insbesondere beugungsbegrenzt fokussiert wird.

10. Verfahren nach Anspruch 8 oder 9, **dadurch gekennzeichnet, daß** der Strahl im Beleuchtungsschritt punktförmig oder linienförmig fokussiert wird.

11. Verfahren nach einem der Ansprüche 8 bis 10, **dadurch gekennzeichnet, daß** zum Aufnehmen des Objekts synchron mit der Bewegung des Strahls räumlich aufgelöst die durch den Strahl erzeugte Probenstrahlung detektiert wird.

12. Verfahren nach einem der Ansprüche 8 bis 11, **dadurch gekennzeichnet, daß** die zeitliche Änderung der Phase linear oder periodisch erfolgt.

13. Verfahren nach einem der Ansprüche 8 bis 12, **dadurch gekennzeichnet, daß** der Beleuchtungsschritt, die Aufnahmeschritte und der Erzeugüngsschritt mehrmals durchgeführt werden, wobei in den unterschiedlichen Beleuchtungsschritten eine Fokussierung des Lichtstrahls in unterschiedliche Tiefen der Probe erfolgt, so daß Bilder aus den unterschiedlichen Tiefen der Probe erzeugt werden können.

14. Verfahren nach einem der Ansprüche 8 bis 13, **dadurch gekennzeichnet, daß** mehrere Lichtstrahlen, deren Intensitäten zeitlich moduliert werden, voneinander beabstandet auf das Objekt fokussiert und zusammen über das Objekt bewegt werden, wobei die Bewegung und die Intensitätsmodulation der Lichtstrahlen so synchronisiert werden, daß die Strahlen das Muster scannend erzeugen.

## Claims

1. Device for generating an image of an object, having an illumination module (1) for illuminating the object with a pattern whose phase is temporally varied, a recording module (4) for carrying out a plurality of recordings of the object, and a processing module (5) for generating an image from recordings of the object, **characterized in that** the illumination module (1) generates a light beam (S1) or a light beam pencil, and a scanning module (2) is provided in order to deflect the light beam or light beam pencil over the object, and an optical switch (9) is provided in the illumination module in order to modulate intensity synchronously with the deflection, a control module (6) being provided to control the illumination module and the scanning module.

2. Device according to Claim 1, **characterized in that** an objective (3) is provided in the illumination module (1) in order to focus the light beam (S1) onto the sample.

3. Device according to Claim 1 or 2, **characterized in that** the light beam is focused onto the sample in punctiform or linear fashion.

4. Device according to one of the above claims, **characterized in that** the recording module (4) has an area detector (12) for the spatially resolved detection of the sample radiation over the objective (3).

5. Device according to Claim 4, **characterized in that** the area detector (12) is designed as a matrix detector or line detector.

6. Device according to one of the above claims, **characterized in that** the illumination module (1) is designed for the temporally linear or periodic variation of the phase.

7. Device according to one of the above claims, **characterized in that** an illumination module (1) is provided in order to generate a plurality of light beams which are spaced apart from one another and focused onto the object and can be moved over the object.

8. Method for generating an image of an object, having the steps of:
illuminating the object with a periodic pattern whose phase is temporally varied, repeatedly recording the object during the phase variation, and generating the image from the recordings,
**characterized in that** a light beam whose intensity is temporally modulated is moved over the object in the illumination step, the movement and intensity modulation of the light beam being synchronized such that the beam generates the pattern in a scanning fashion.

9. Method according to Claim 8, **characterized in that** the beam is focused, in particular in a diffraction-limited fashion, in the illumination step.

10. Method according to Claim 8 or 9, **characterized in that** the beam is focused in a punctiform or linear fashion in the illumination step.

11. Method according to one of Claims 8 to 10, **characterized in that** the sample radiation generated by the beam is detected with spatial resolution in order to record the object synchronously with the movement of the beam.

12. Method according to one of Claims 8 to 11, **characterized in that** the temporal variation of the phase is performed linearly or periodically.

13. Method according to one of Claims 8 to 12, **characterized in that** the illumination step, the recording steps and the generating step are carried out several times, the light beam being focused at different depths of the sample in the different illumination steps so that it is possible to generate images from the different depths of the sample,

14. Method according to one of Claims 8 to 13, **characterized in that** a plurality of light beams whose intensities are temporally modulated are focused in a fashion spaced apart from one another onto the object and moved together over the object, the movement and the intensity modulation of the light beams being synchronized such that the beams generate the pattern in a scanning fashion.

## Revendications

1. Procédé pour générer une image d'un objet, comprenant un module d'éclairement (1) destiné à éclairer l'objet avec un motif dont la phase est modifiée temporellement, un module d'enregistrement (4) destiné à effectuer plusieurs enregistrements de l'objet, un module de traitement (5) destiné à générer une image à partir d'enregistrements de l'objet, **caractérisé en ce que**
le module d'éclairement (1) génère un rayon lumineux (S1) ou un faisceau de rayons lumineux et **en ce qu'**un module de balayage (2) est prévu pour dévier le rayon lumineux ou le faisceau de rayons lumineux sur l'objet et **en ce qu'**un commutateur optique (9) est prévu dans le module d'éclairement pour effectuer une modulation d'intensité en synchronisme avec la déviation,
dans lequel un module de commande (6) est prévu pour commander le module d'éclairement et le module de balayage.

2. Dispositif selon la revendication 1, **caractérisé en ce qu'**un objectif (3) est prévu dans le module d'éclairement (1) pour focaliser le rayon lumineux (S1) sur l'échantillon.

3. Dispositif selon la revendication 1 ou 2, **caractérisé en ce que** le rayon lumineux est focalisé sous forme ponctuelle ou linéaire sur l'échantillon.

4. Dispositif selon l'une quelconque des revendications précédentes, **caractérisé en ce que** le module d'enregistrement (4) comprend un détecteur de surface (12) destiné à la détection déclenchée spatialement du rayonnement de l'échantillon au moyen de l'objectif (3).

5. Dispositif selon la revendication 4, **caractérisé en ce que** le détecteur de surface (12) est réalisé sous la forme d'un détecteur matriciel ou linéaire.

6. Dispositif selon l'une quelconque des revendications précédentes, **caractérisé en ce que** le module d'éclairement (1) est réalisé de manière à effectuer une modification linéaire ou périodique dans le temps de la phase.

7. Dispositif selon l'une quelconque des revendications précédentes, **caractérisé en ce qu'**un module d'éclairement (1) est prévu pour générer plusieurs rayons lumineux qui sont espacés les uns des autres et sont focalisés sur l'objet et peuvent être déplacés sur l'objet.

8. Procédé pour générer une image d'un objet, comprenant les étapes consistant à :
éclairer l'objet avec un motif périodique dont la phase est modifiée temporellement, enregistrer plusieurs fois l'objet pendant la modification de phase et générer l'image à partir des enregistrements,
**caractérisé en ce que**
lors de l'étape d'éclairement, un rayon lumineux dont l'intensité est modulée temporellement est déplacé sur l'objet, le déplacement et la modulation d'intensité du rayon lumineux étant synchronisés de telle manière que le rayon génère le motif par balayage.

9. Procédé selon la revendication 8, **caractérisé en ce que** le rayon est focalisé lors de l'étape d'éclairement et **en ce qu'**il est notamment focalisé en étant limité par la diffraction.

10. Procédé selon la revendication 8 ou 9, **caractérisé en ce que** lors de l'étape d'éclairement, le rayon est focalisé sous forme ponctuelle ou linéaire.

11. Procédé selon l'une quelconque des revendications 8 à 10, **caractérisé en ce que** le rayonnement de l'échantillon généré par le rayon est détecté pour enregistrer l'objet en synchronisme avec le déplacement du rayon de manière déclenchée spatialement.

12. Procédé selon l'une quelconque des revendications 8 à 11, **caractérisé en ce que** la modification temporelle de la phase s'effectue linéairement ou périodiquement.

13. Procédé selon l'une quelconque des revendications 8 à 12, **caractérisé en ce que** l'étape d'éclairement, les étapes d'enregistrement et l'étape de génération sont effectuées plusieurs fois, dans lequel, lors des différentes étapes d'éclairement, une focalisation du rayon lumineux est effectuée à différentes profondeurs de l'échantillon afin que des images provenant des différentes profondeurs de l'échantillon puissent être générées.

14. Procédé selon l'une quelconque des revendications 8 à 13, **caractérisé en ce que** plusieurs rayons lumineux dont les intensités sont modulées temporellement, sont focalisés sur l'objet de manière à ce qu'ils soient espacés les uns des autres et sont déplacés ensemble sur l'objet, le déplacement et la modulation d'intensité des rayons lumineux étant synchronisés de manière à ce que les rayons génèrent le motif par balayage.
